# EUROPEAN PATENT APPLICATION

(11) **EP 4 557 420 A1**
(43) Date of publication of application: **21.05.2025**
(21) Application number: 23852591.9
(22) Date of filing: 09.08.2023
(51) Int. Cl.: H01M 10/052, H01M 4/1315, H01M 4/134, H01M 4/38, H01M 4/40, H01M 4/46, H01M 4/58, H01M 10/0562, H01M 10/0585

(54) **ALL-SOLID-STATE BATTERY AND METHOD OF MANUFACTURING ALL-SOLID-STATE BATTERY**

(30) Priority: 12.08.2022 JP 2022129071
(71) Applicant: Sanoh Industrial Co., Ltd., Shibuya-ku Tokyo 150-0002 (JP)
(72) Inventor: MAEDA, Yu, Koga-shi, Ibaraki 306-0041 (JP); NISHIYAMA, Junya, Koga-shi, Ibaraki 306-0041 (JP)
(74) Representative: Cabinet Netter
(86) International application number: PCT/JP2023/029029
(87) International publication number: WO 2024/034629

(57) **Abstract**

Provided is an all-solid-state battery in which a decrease in cycle performance due to an increase in interface resistance during charging and discharging is suppressed. An all-solid-state battery 10 includes a positive electrode layer 11 containing a positive electrode active material, a negative electrode layer 12 containing a negative electrode active material, and a solid electrolyte layer 13 which is formed between the positive electrode layer 11 and the negative electrode layer 12 and contains a solid electrolyte, and performs charging and discharging by a conversion reaction, in which an absolute value of a difference [(Ep) - (En)] between an actual expansion ratio (Ep) of the positive electrode layer 11 calculated by Formula (1) below and an actual expansion ratio (En) of the negative electrode layer 12 calculated by Formula (2) below is 10% or less. Actual expansion ratio of positive electrode layer (Ep) = Expansion coefficient of positive electrode layer × Thickness ratio of positive electrode layer... (1) Actual expansion ratio of negative electrode layer (En) = Expansion coefficient of negative electrode layer × Thickness ratio of negative electrode layer... (2)

## Description

### TECHNICAL FIELD

The present invention relates to an all-solid-state battery including a solid electrolyte layer and a method of manufacturing the same, and particularly to an all-solid-state battery with which an increase in resistance due to repeated charging and discharging at an interface between the solid electrolyte layer and an electrode layer is able to be curbed, and a method of manufacturing the same.

### BACKGROUND ART

As a power source mounted on a vehicle or the like using electricity as a driving source or a power source mounted on an electrical product or the like such as a personal computer or a mobile terminal, secondary batteries capable of realizing a relatively high output and a high capacity such as a lithium ion secondary battery are used. Among these secondary batteries, particularly, a lithium ion secondary battery is lightweight and has a high energy density, and thus is preferable as a high-output power source for driving vehicles such as an electric vehicle (EV), a plug-in hybrid electric vehicle (PHV), and a hybrid electric vehicle (HV), and the demand therefor is expected to increase further in the future.

In addition, in recent years, with regard to one form of secondary batteries, various research and development have been conducted on secondary batteries using solid electrolytes in the form of powders, pellets, plates formed by sintering, or the like instead of liquid electrolytes (electrolytic solutions), and which are also referred to as all-solid-state batteries, with the aim of commercialization.

Since the all-solid-state battery does not use a liquid electrolyte (particularly, a non-aqueous electrolytic solution), it is possible to easily construct a laminated electrode body having a laminated structure including a positive electrode layer, a negative electrode layer, and a solid electrolyte layer without performing a complicated treatment in the case of handling an organic solvent such as a non-aqueous electrolytic solution.

In addition, since the electrolytic solution is not used, the structure of the electrode body is simple, which can also contribute to improvement of the battery capacity per unit volume of a battery. Furthermore, since the electrolytic solution is not used, safety is high. Therefore, it is expected to be used as a high-output power source for driving a vehicle that requires a higher capacity.

As a measure for increasing the capacity, for example, Patent Document 1 discloses a negative electrode and a negative electrode material (negative electrode active material) for all-solid-state battery applications suitable for realizing a high energy density and a high capacity retention rate.

### RELATED ART DOCUMENT

### PATENT DOCUMENT

Patent Document 1: Japanese Unexamined Patent Application Publication No. 2017-054720

### SUMMARY OF THE INVENTION

### PROBLEMS TO BE SOLVED BY THE INVENTION

Incidentally, as one of problems of the all-solid-state battery, it is known that there is a concern that a gap or a crack may occur at an interface between the solid electrolyte layer and the positive electrode layer and/or the negative electrode layer due to expansion and contraction of the active material when charging and discharging are performed. In particular, as described in Patent Document 1, in an active material having a high energy density, a volume change occurs due to a conversion reaction during charging and discharging, and a rate of expansion and contraction thereof is large. Therefore, it is considered that when charging and discharging are repeatedly performed, interface contact properties deteriorate at an interface between a positive electrode layer or a negative electrode layer and a solid electrolyte layer, and interface resistance increases. When such an increase in interface resistance occurs, cycle characteristics of the all-solid-state battery significantly deteriorate every time charging and discharging are performed.

The present invention has been made in order to solve such a problem relating to an all-solid-state battery, and an object thereof is to provide an all-solid-state battery in which a reduction in a contact area between a solid electrolyte layer and an electrode is prevented by expansion of an active material during charging and discharging, thereby suppressing a decrease in cycle performance due to an increase in interface resistance.

### MEANS FOR SOLVING THE PROBLEMS

According to the present embodiment, there is provided an all-solid-state battery having a laminated structure including a positive electrode layer containing a positive electrode active material, a negative electrode layer containing a negative electrode active material, and a solid electrolyte layer containing a solid electrolyte, in which a decrease in cycle performance is suppressed.

That is, the all-solid-state battery in the present embodiment is an all-solid-state battery including a positive electrode layer containing a positive electrode active material, a negative electrode layer containing a negative electrode active material, and a solid electrolyte layer which is formed between the positive electrode layer and the negative electrode layer and contains a solid electrolyte, and performing charging and discharging by a conversion reaction, in which an absolute value of a difference [(Ep) - (En)] between an actual expansion ratio (Ep) of the positive electrode layer calculated by Formula (1) below and an actual expansion ratio (En) of the negative electrode layer calculated by Formula (2) below is 10% or less. Actual expansion ratio of positive electrode layer (Ep) = Expansion coefficient of positive electrode layer × Thickness ratio of positive electrode layer... (1) Actual expansion ratio of negative electrode layer (En) = Expansion coefficient of negative electrode layer × Thickness ratio of negative electrode layer... (2)

A method of manufacturing an all-solid-state battery in the present embodiment is a method of manufacturing an all-solid-state battery which performs charging and discharging by a conversion reaction, the method including: a step of preparing a positive electrode layer containing a positive electrode active material, a negative electrode layer containing a negative electrode active material, and a solid electrolyte layer containing a solid electrolyte; and a step of laminating the positive electrode layer, the negative electrode layer, and the solid electrolyte layer to be disposed between the positive electrode layer and the negative electrode layer and pressing the layers in a lamination direction, in which an absolute value of a difference between an actual expansion ratio (Ep) of the positive electrode layer calculated by Formula (1) below and an actual expansion ratio (En) of the negative electrode layer calculated by Formula (1) below is 10% or less. Actual expansion ratio of positive electrode layer (Ep) = Expansion coefficient of positive electrode layer × Thickness ratio of positive electrode layer... (1) Actual expansion ratio of negative electrode layer (En) = Expansion coefficient of negative electrode layer × Thickness ratio of negative electrode layer... (2)

### EFFECTS OF THE INVENTION

According to the all-solid-state battery and the method of manufacturing an all-solid-state battery disclosed in the present application, it is possible to provide an all-solid-state battery in which a decrease in cycle performance due to an increase in interface resistance is suppressed even when charging and discharging are repeated.

### BRIEF DESCRIPTIONS OF THE DRAWINGS

[Fig. 1] is a cross-sectional diagram illustrating a schematic configuration of an all-solid-state battery of the present embodiment.
[Fig. 2A] is a conceptual diagram for explaining a behavior in the all-solid-state battery of Fig. 1 when charging and discharging are performed after initial charging.
[Fig. 2B] is a conceptual diagram for explaining a behavior in the all-solid-state battery of Fig. 1 when charging and discharging are performed after initial discharging.
[Fig. 3] is a conceptual diagram for explaining a behavior in a conventional all-solid-state battery when charging and discharging are performed.

### DETAILED DESCRIPTION OF PREFERRED EMBODIMENT

### <Preliminary Considerations>

First, the present inventors studied deterioration of cycle characteristics in charging and discharging when a material having a large expansion coefficient is used, in an all-solid-state battery. In the study, a negative electrode active material having a relatively large degree of expansion and contraction during charging and discharging was employed as the negative electrode active material, and a positive electrode active material having a relatively small degree of expansion and contraction during charging and discharging was employed as the positive electrode active material, and cycle characteristics thereof were examined.

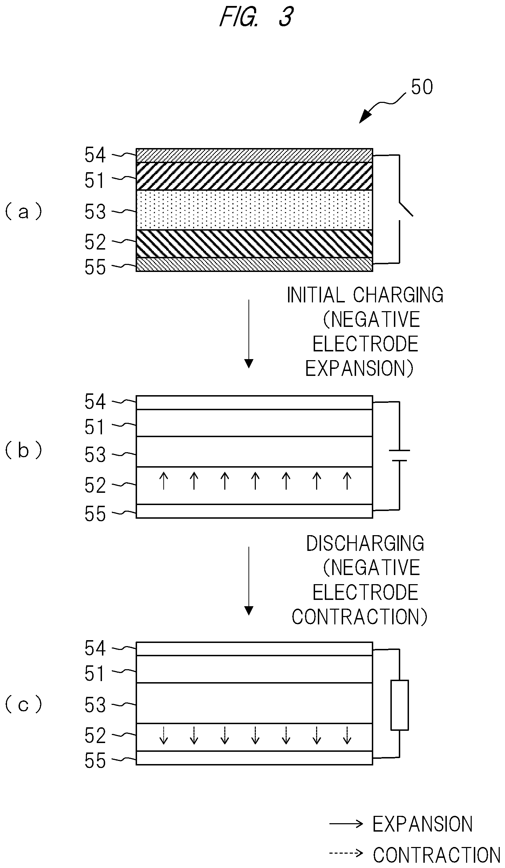

In this preliminary examination, regarding the principle behind the deterioration of cycle characteristics, a conceptual diagram for explaining a behavior when charging and discharging are performed is illustrated in Fig. 3. Hereinafter, description will be made with reference to Fig. 3.

First, an all-solid-state battery 50 was prepared in which a positive electrode layer 51, a negative electrode layer 52, and a solid electrolyte layer 53 formed therebetween were laminated, and a positive electrode current collector 54 and a negative electrode current collector 55 were further provided (Fig. 3(a)). Here, the negative electrode layer 52 contains Si (silicon) as a negative electrode active material, and the positive electrode layer 51 contains LiCoO₂ as a positive electrode active material.

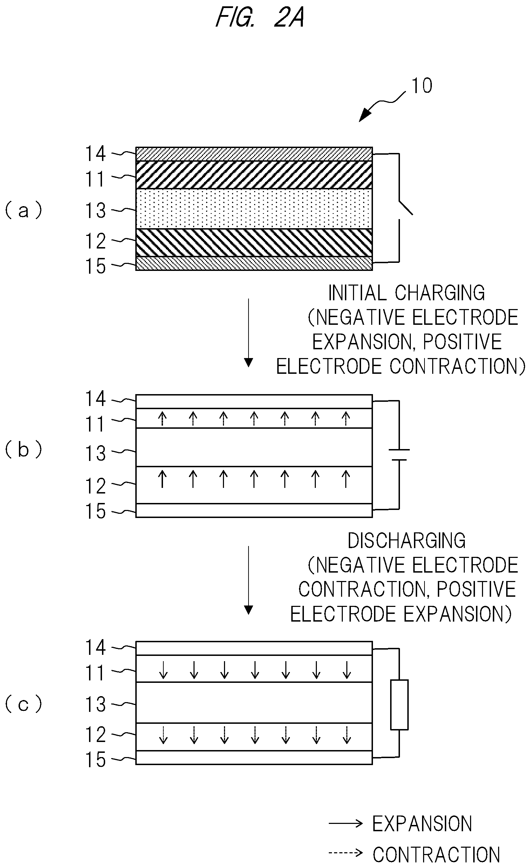

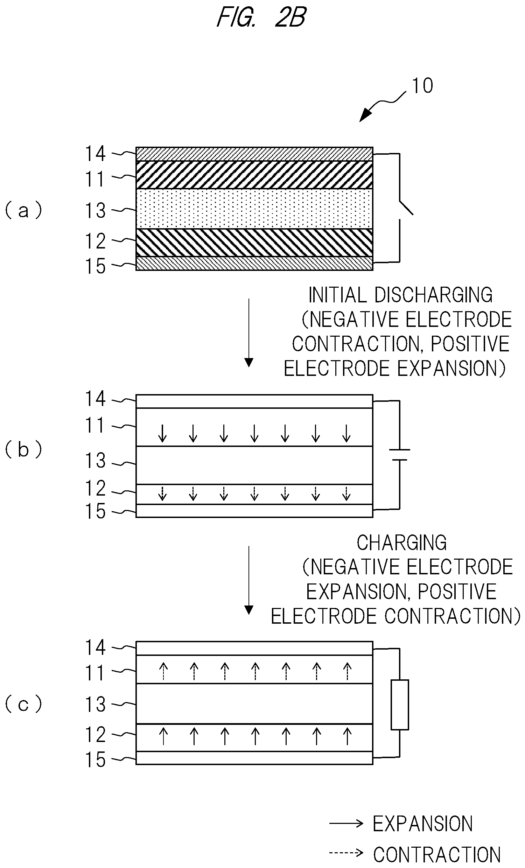

Next, the all-solid-state battery 50 is initially charged or initially discharged. Hereinafter, a case of initial charging will be described as an example. In the initial charging, the negative electrode layer 52 greatly expands in a lamination direction since the expansion coefficient of silicon contained therein is as large as 10% or more, but the positive electrode layer 51 does not expand in the lamination direction since a material thereof hardly expands, and the solid electrolyte layer 53 is compressed (Fig. 3(b)). Here, the expansion is indicated by solid arrows, and the contraction is indicated by dashed arrows. The same applies to Figs. 2A and 2B which will be described below.

When discharging is performed after the charging is completed, the negative electrode layer 52 then contracts, and the compressed solid electrolyte layer 53 is released (Fig. 3(c)). In this case, since a force acts on the negative electrode layer 52 in a direction away from the solid electrolyte layer 53, a gap or a crack is generated at these interfaces, and the contact area is likely to decrease.

Further, when charging and discharging are repeated after the discharging operation is performed, a change of state between Fig. 3(b) and Fig. 3(c) is repeatedly performed, and compression and release of the solid electrolyte layer 53 are repeated by expansion and contraction of the negative electrode layer 52. Therefore, it is considered that the interface resistance tends to increase, the battery capacity decreases, and the cycle characteristics of the all-solid-state battery deteriorate significantly.

In fact, in the all-solid-state battery configured of the positive electrode layer containing the positive electrode active material and the negative electrode layer containing the negative electrode active material described above, when cycle characteristics were evaluated, it was confirmed that when 50 cycles of charging and discharging were performed, a capacity retention rate decreased to about 30% with respect to the first cycle.

In the above considerations, starting from the initial charging has been described, but even in the case of the initial discharging, it is assumed that a similar phenomenon occurs due to repetition of charging and discharging, and the cycle characteristics are likely to deteriorate.

### <Embodiment>

Hereinafter, an embodiment will be described in detail with reference to examples and drawings. In all the drawings for describing the embodiment, members having the same function are denoted by the same or related reference numerals, and repeated description thereof will be omitted.

### [All-solid-state Battery]

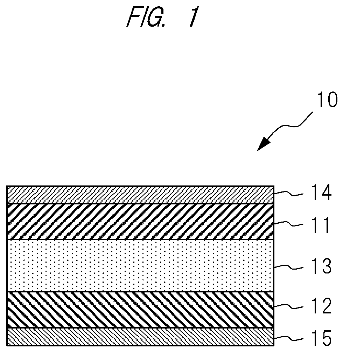

The all-solid-state battery according to an embodiment of the present invention may be, for example, an all-solid-state battery 10 including a positive electrode layer 11, a negative electrode layer 12, a solid electrolyte layer 13 formed between the positive electrode layer 11 and the negative electrode layer 12, a positive electrode current collector 14, and a negative electrode current collector 15 as illustrated in Fig. 1.

In the following description, an all-solid-state lithium ion secondary battery is exemplified as an application target of the technique disclosed herein, but the present invention is not limited thereto. The type of the all-solid-state battery disclosed herein may be an all-solid-state battery constituting a battery using another metal ion as a charge carrier, for example, a sodium ion secondary battery, a magnesium ion secondary battery, or the like.

Here, the all-solid-state battery 10 is a battery that performs charging and discharging by a conversion reaction. In the conversion reaction, for example, unlike an intercalation reaction in which lithium ions enter and leave between layers of active materials, an oxidation-reduction reaction is performed between the active material and the lithium ions, and charging and discharging are performed. In this case, the active material expands or contracts due to the conversion reaction, and a volume change amount thereof is large.

In the present embodiment, the positive electrode active material and/or the negative electrode active material may be any active material that performs a conversion reaction. That is, at least one of the positive electrode active material and the negative electrode active material may be any active material that undergoes a conversion reaction. According to the present embodiment, it is possible to provide an all-solid-state battery capable of sufficiently suppressing deterioration in cycle performance due to expansion or contraction even when the all-solid-state battery has such an active material that undergoes a conversion reaction.

### (Positive Electrode Layer)

The positive electrode layer 11 used in the present embodiment is a positive electrode layer containing a positive electrode active material. Here, the positive electrode active material refers to a material involved in occlusion and release of charge carriers (for example, a lithium ion in a lithium ion secondary battery) on a positive electrode side.

As the positive active material, a conventionally known positive electrode active material can be used, and for example, a conversion type active material such as CuCl₂, FeF₂, S, AgCl, FeCl₃, NiCl₂, CoCl₂, FeCl₂, Li₂S, LiCl, LiF, AgF, Br₂, LiBr, CoF₃, CuF₂, CuF, BiF₃, CuCl₂, NiF₂, LiI, I₂, CoF₂, FeF₃, MnF₃, CrF₃, CuS, Li₂Se, Se, CuSe, Cu₂O, CoS₂, Cu₂S, NiS, FeS₂, Te, Li₂Te, VF₃, FeS, CoSe₂, MnS₂, MnCl₂, Co₃S₄, FeSe, TiF₃, or MnS is preferable. Among them, CuCl₂, FeF₂, and S are preferable.

The positive electrode active material used here is contained as particles, and an average particle diameter (D50) based on a laser diffraction/scattering method is preferably, for example, about 0.5 µm to 20 µm, and more preferably about 1 µm to 10 µm.

A solid electrolyte other than the positive electrode active material can be contained in the positive electrode layer 11. Furthermore, various optional components can be contained in the same manner as in the positive electrode layer of a conventional type of battery. Examples of the optional component include a conductive auxiliary agent and a binder.

Examples of the solid electrolyte that can be used here include various oxide-based solid electrolytes or sulfide-based solid electrolytes. Examples of the oxide-based solid electrolyte preferably include various oxides having a NASICON structure, a garnet structure, or a perovskite structure.

For example, those represented by the general formula: LiₓAO_{y} (Here, A is B, C, Al, Si, P, S, Ti, Zr, Nb, Mo, Ta, or W, and x and y are positive real numbers) can be mentioned. Specific examples include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, and Li₂WO₄. Alternatively, preferred examples include glass or glass ceramics such as Li₂O-B₂O₃-P₂O₅-based, Li₂O-SiO₂-based, Li₂O-B₂O₃-based, and Li₂O-B₂O₃-ZnO-based.

In particular, a sulfide-based solid electrolyte is preferably used from the viewpoint of having high ionic conductivity. Examples thereof include glass or glass ceramics such as Li₂S-SiS₂-based, Li₂S-P₂S₃-based, Li₂S-P₂S₅-based, Li₂S-GeS₂-based, Li₂S-B₂S₃-based, Li₃PO₄-P₂S₅-based, and Li₄SiO₄-Li₂S-SiS₂-based.

In addition, from the viewpoint of achieving higher ionic conductivity, it is preferable to use a Li₂S-based solid solution composed of Li₂S and lithium halide (for example, LiCl, LiBr, or LiI). Preferred examples include LiBr-Li₂S-P₂S₅, LiI-Li₂S-P₂S₅, and LiBr-LiI-Li₂S-P₂S₅.

The solid electrolyte to be used is particulate, and an average particle diameter (D50) based on a laser diffraction/scattering method is preferably, for example, 0.1 µm to 10 µm, and more preferably 0.4 µm to 5 µm.

Preferred examples of the conductive auxiliary agent that can be used here include carbon black such as acetylene black and other (such as graphite or carbon nanotube) carbon materials.

Preferred examples of the binder that can be used here include a fluorine-based binder such as polyvinylidene fluoride (PVDF) and polytetrafluoroethylene (PTFE), and a rubber-based binder such as styrene-butadiene rubber (SBR).

In a case of forming the positive electrode layer 11 by containing a positive electrode active material, a solid electrolyte, a conductive auxiliary agent, and a binder, when a content proportion thereof on a mass basis is expressed as positive electrode active material : conductive auxiliary agent : binder : solid electrolyte = x : y : z : v, the content proportions (% by mass) are preferably in the ranges of 50 ≤ x ≤ 92.5, 2.5 ≤ y ≤ 45, 2.5 ≤ z ≤ 45, and 2.5 ≤ v ≤ 45. Furthermore, these ratios are more preferably in the ranges of 65 ≤ x ≤ 92.5, 2.5 ≤ y ≤ 20, 2.5 ≤ z ≤ 15, and 2.5 ≤ v ≤ 20.

A thickness of the positive electrode layer 11 is not particularly limited as long as the thickness satisfies the relationship described later. The thickness of the positive electrode layer 11 is preferably, for example, in the range of 10 µm to 500 µm.

### (Negative Electrode Layer)

The negative electrode layer 12 used in the present embodiment is a negative electrode layer containing a negative electrode active material. Here, the negative electrode active material refers to a material involved in occlusion and release of charge carriers (for example, a lithium ion in a lithium ion secondary battery) on a negative electrode side.

Examples of the negative electrode active material include conversion type active materials such as Si-based, Li-based, Sn-based, Mg-based, and Al-based. Among them, Si-based, Li-based, Mg-based, and Al-based active materials are preferable in terms of high energy density per weight or per volume.

Examples of the Si-based negative electrode active material include Si, silicon oxide represented by SiOₐ (here, 0.05 < a < 1.95), silicon carbide represented by SiC_{b} (0 < b < 1), and silicon nitride represented by SiN_{c} (0 < c < 4/3).

Also, other examples of the silicon-based negative electrode active material include an alloy material composed of silicon and an element other than silicon. Examples of elements other than silicon include C, Fe, Co, Sb, Bi, Pb, Ni, Cu, Zn, Ge, In, Sn, and Ti.

Examples of the Sn-based negative electrode active material include tin, a tin oxide, a tin nitride, a tin-containing alloy, and solid solutions thereof. Some of tin atoms contained therein may be substituted with one kind or two or more kinds of elements.

Examples of the oxide include tin oxide represented by SnO_{d} (0 < d < 2) and tin dioxide (SnO₂). Examples of the tin-containing alloy include a Ni-Sn alloy, a Mg-Sn alloy, a Fe-Sn alloy, a Cu-Sn alloy, and a Ti-Sn alloy. Examples of a tin compound include SnSiO₃, Ni₂Sn₄, and Mg₂Sn.

Examples of the Li-based negative electrode active material include Li, an In-Li alloy, an Al-Li alloy, a Mg-Li alloy, a Zn-Li alloy, a Sn-Li alloy, and a Sb-Li alloy.

Examples of the Mg-based negative electrode active material include Mg, a Ni-Mg alloy, a Sn-Mg alloy, a Fe-Mg alloy, a Cu-Mg alloy, and a Ti-Mg alloy.

Examples of the Al-based negative electrode active material include Al, a Ni-Al alloy, a Sn-Al alloy, a Fe-Al alloy, a Cu-Al alloy, and a Ti-Al alloy.

The negative electrode active material used here is contained as particles, and an average particle diameter (D50) based on a laser diffraction/scattering method is, for example, appropriately about 1 µm to 20 µm, and particularly preferably about 2 µm to 10 µm.

A solid electrolyte other than the negative electrode active material can be contained in the negative electrode layer 12. Furthermore, various optional components can be contained in the same manner as in the negative electrode layer of a conventional type of battery. As the optional component, a conductive auxiliary agent, a binder, or the like are mentioned.

As the solid electrolyte, the conductive auxiliary agent, and the binder contained in the negative electrode layer 12, the same components as those described above as optional components contained in the positive electrode layer 11 can be used. Therefore, a detailed description of these components will be omitted.

A thickness of the negative electrode layer 12 is not particularly limited as long as the thickness satisfies the relationship described later. The thickness of the negative electrode layer 12 is preferably, for example, in the range of 10 µm to 500 µm.

### (Solid Electrolyte Layer)

The solid electrolyte layer 13 used in the present embodiment can be formed by a known solid electrolyte layer used in an all-solid-state battery, and can contain various solid electrolytes as in the conventional case, and is not limited at all.

As illustrated in Fig. 1, the solid electrolyte layer 13 is formed between the positive electrode layer 11 and the negative electrode layer 12, and is configured to be in contact with the positive electrode layer 11 and the negative electrode layer 12, respectively, so that charge carriers such as lithium ions can move. The solid electrolyte layer 13 serves as a separator, and prevents a short circuit between the positive electrode layer 11 and the negative electrode layer 12 while transmitting lithium ions.

Here, as a material for forming the solid electrolyte layer 13, the same kind of material as the solid electrolyte described for the positive electrode layer 11 and the negative electrode layer 12 can be suitably used. Therefore, a detailed description of the components will be omitted.

### (Positive Electrode Current Collector)

As the positive electrode current collector 14, any positive electrode current collector that is used as a positive electrode current collector of a battery of this type can be used without particular limitation. Typically, a positive electrode current collector formed of a metal having good conductivity is preferable, and the positive electrode current collector is formed of, for example, a metal material such as aluminum, nickel, titanium, stainless steel, copper, and carbon-coated aluminum, nickel, titanium, stainless steel, and copper (primer coated foil). In particular, stainless steel (for example, stainless foil) is preferable. A thickness of the positive electrode current collector 14 is not particularly limited, and is appropriately about 5 µm to 50 µm, and more preferably about 8 µm to 30 µm from the viewpoint of the balance between the capacity density of the battery and the strength of the current collector.

### (Negative Electrode Current Collector)

As the negative electrode current collector 15, any negative electrode current collector that is used as a negative electrode current collector of a battery of this type can be used without particular limitation. Typically, a negative electrode current collector formed of metal having good conductivity is preferable, and for example, copper (for example, copper foil) or an alloy mainly composed of copper can be used. A thickness of the negative electrode current collector 15 is not particularly limited, and is appropriately about 5 µm to 50 µm, and more preferably about 8 µm to 30 µm from the viewpoint of the balance between the capacity density of the battery and the strength of the current collector.

### (Combination of Positive Electrode Layer and Negative Electrode Layer)

Furthermore, in the present embodiment, the configuration is characterized in that the positive electrode layer 11 and the negative electrode layer 12 described above are combined so as to have a predetermined relationship.

First, a theoretical expansion coefficient of the active material, an expansion coefficient of an electrode material containing the active material, and an actual expansion coefficient of the electrode layer formed using the electrode material in the positive electrode layer 11 and the negative electrode layer 12 will be described.

As described above, the expansion and contraction occur due to the volume change of the positive electrode active material and the negative electrode active material in charge and discharge, and are determined according to the kinds and amounts of the positive electrode active material and the negative electrode active material contained and the thickness of the electrode layer.

### <Theoretical Expansion Coefficient of Active Material>

The theoretical expansion coefficient of the active material is unique depending on the kind thereof. Some of the positive electrode active materials and the negative electrode active materials are illustrated in Table 1, for example. In the present specification, the theoretical expansion coefficient is represented by a theoretical expansion coefficient (volume expansion coefficient) when a volume change amount of Li metal at 25°C is set as 100%.

### [Table 1]

**Table 1**

| Electrode type | Active material | Theoretical Expansion coefficient | Density(g/cm³) |
|---|---|---|---|
| Positive electrode | LiCoO₂ | 4% | 4.9 |
| | S | 79% | 2 |
| | CuCl₂ | 21% | 3.4 |
| Negative electrode | graphite | 12% | 1.6 |
| | Si | 320% | 2.3 |
| | Li | 100% | 0.5 |

### <Expansion Coefficient of Electrode Layer>

The expansion coefficients of the positive electrode layer 11 and the negative electrode layer 12 are calculated from the content proportion of the positive electrode active material contained in the positive electrode layer 11. Similarly, the expansion coefficients of the negative electrode layer 12 are calculated from the content proportion of the negative electrode active material contained in the negative electrode layer 12. That is, the expansion coefficient of the electrode layer described here can also be referred to as the expansion coefficient of a material (composition) for forming the electrode layer.

Among the materials forming the electrode layer used here, the material contributing to expansion and contraction is an active material. Therefore, the expansion coefficient of the electrode layer can be calculated by the content of the active material in the positive electrode layer 11 and the negative electrode layer 12. The expansion coefficient of the electrode layer can also be adjusted by adjusting the content thereof.

### <Actual Expansion Ratio of Electrode Layer>

Then, from the expansion coefficient of the positive electrode layer 11 and the expansion coefficient of the negative electrode layer 12 calculated as described above, the positive electrode layer 11 and the negative electrode layer 12 having the thicknesses actually used for the all-solid-state battery 10 are formed. In consideration of the thickness used in this manner, the actual expansion ratio of the positive electrode layer 11 and the negative electrode layer 12 is calculated. The actual expansion ratio is calculated as follows using the thicknesses of the positive electrode layer 11 and the negative electrode layer 12 as a ratio (thickness ratio).

The actual expansion ratio in the positive electrode layer 11 is obtained from the expansion coefficient of the positive electrode layer 11 and the thickness ratio of the positive electrode layer 11 described above by the following formula (1), and the actual expansion ratio in the negative electrode layer 12 is obtained from the expansion coefficient of the negative electrode layer 12 and the thickness ratio of the negative electrode layer 12 described above by the following formula (2). Note that the actual expansion ratio is calculated from the expansion coefficient when charging and discharging are started when a surface of the all-solid-state battery 10 is 25°C on a condition that a sufficient time elapses such that the surface temperature and the internal temperature of the all-solid-state battery 10 become the same temperature.

Actual expansion ratio of positive electrode layer (Ep) = Expansion coefficient of positive electrode layer × Thickness ratio of positive electrode layer... (1)

Actual expansion ratio of negative electrode layer (En) = Expansion coefficient of negative electrode layer × Thickness ratio of negative electrode layer... (2)

### <Combination of Electrode Layers>

Then, in the present embodiment, the positive electrode layer 11 and the negative electrode layer 12 are formed as a combination in which an absolute value of a difference [(Ep) - (En)] between the actual expansion ratio (Ep) of the positive electrode layer and the actual expansion ratio (En) of the negative electrode layer thus obtained is 10% or less, and the all-solid-state battery 10 is obtained. Such a relationship can be adjusted by the material of the electrode layer described above, and can also be adjusted by the electrode thickness actually used. Since the material may affect the battery capacity or charge-discharge characteristics, it is more practical to perform adjustment by the electrode thickness.

The absolute value of the difference [(Ep) - (En)] between the actual expansion ratios is preferably as small as possible, and is preferably 5% or less, more preferably 3% or less, still more preferably 1% or less, and particularly preferably 0.5% or less.

More specifically, examples thereof include forming an electrode material and an electrode layer as illustrated in Table 2 below. The combinations illustrated in Table 2 are examples, and the present invention is not limited thereto.

### [Table 2]

**Table 2**

| Electrode type | | Conventional example | | Electrode A | | Electrode B | | Electrode C | |
|---|---|---|---|---|---|---|---|---|---|
| | | Positive electrode | Negative electrode | Positive electrode | Negative electrode | Positive electrode | Negative | Positive electrode | Negative electrode |
| | | LiCoO₂ | graphite | CuCl₂ | Si | CuCl₂ | Si | CuCl₂ | Li |
| Composition of electrode material (% by mass) | Total composition | 100.0 | 100.0 | 100.0 | 100.0 | 100.0 | 100.0 | 100.0 | 100.0 |
| | Active material | 85.0 | 95.0 | 50.0 | 5.0 | 50.0 | 10.0 | 65.0 | 100.0 |
| | graphite | - | - | - | 50.0 | - | 45.0 | - | - |
| | Solid electrolyte | - | - | 40.0 | 40.0 | 40.0 | 40.0 | 12.5 | 0.0 |
| | Conductive auxiliary agent | 13.0 | 0.0 | 8.0 | 0.0 | 8.0 | 0.0 | 15.0 | 0.0 |
| | Binder | 2.0 | 5.0 | 2.0 | 5.0 | 2.0 | 5.0 | 7.5 | 0.0 |
| Characteristics of Electrode layer | Expansion coefficient | 4.0% | 5.9% | 3.1% | 10.6% | 3.1% | 17.1% | 4.0% | 100.0% |
| | Thickness ratio | 1 | 1 | 3.5 | 1 | 5.5 | 1 | 10 | 0.4 |
| | Actual expansion ratio | 4.0% | 5.9% | 10.8% | 10.6% | 17.0% | 17.1% | 40.3% | 40.0% |

Table 2 illustrates a conventional example in which an active material that performs charging and discharging by an insertion reaction is used as an electrode material, the theoretical expansion coefficient of such an active material is relatively small as illustrated in Table 1, and a defect described above as the conventional problem is unlikely to occur.

Meanwhile, in electrodes A to C, an active material that performs charging and discharging by a conversion reaction is used as an electrode material, and the theoretical expansion rate of such an active material is relatively large as illustrated in Table 1, and the expansion coefficient of an electrode layer formed using these materials is likely to be large. As illustrated in Table 2 above, in a case where the expansion coefficient of the electrode layer exceeds 10%, in particular, the defect described in the conventional problem is likely to occur, and thus the deterioration in cycle characteristics can be effectively suppressed by adopting the configuration illustrated in the present embodiment.

A principle by which deterioration of cycle characteristics can be suppressed by satisfying such a relationship will be described with reference to Figs. 2A and 2B. Similarly to Fig. 3, Figs. 2A and 2B are conceptual diagrams for explaining the behavior when charging and discharging are performed. Fig. 2A illustrates an example of a case where initial charging is performed, and Fig. 2B illustrates an example of a case where initial discharging is performed. Hereinafter, descriptions will be made respectively.

First, the all-solid-state battery 10 described in the present embodiment is prepared in which the positive electrode layer 11, the negative electrode layer 12, and the solid electrolyte layer 13 formed therebetween are laminated, and the positive electrode current collector 14 and the negative electrode current collector 15 are further provided (Fig. 2A(a)).

Next, the all-solid-state battery 10 is initially charged. In the present embodiment, since an active material having a large theoretical expansion coefficient is contained, in this initial charging, the negative electrode layer 12 greatly expands in the lamination direction, and at the same time, the positive electrode layer 11 greatly contracts in the lamination direction. In this case, in the present embodiment, as described above, the positive electrode layer 11 and the negative electrode layer 12 are formed so that actual expansion ratios thereof are close to each other. Therefore, since the amounts of change (the amount of expansion and the amount of contraction) in the positive electrode layer 11 and the negative electrode layer 12 are close to each other, the solid electrolyte layer 13 is not compressed unlike the all-solid battery 50 described in Fig. 3 (Fig. 2A(b)).

When discharging is performed after the charging is completed, the positive electrode layer 11 expands and the negative electrode layer 12 contracts this time. Also here, since the amounts of change (the amount of expansion and the amount of contraction) in the positive electrode layer 11 and the negative electrode layer 12 are close to each other, a force that separates a contact surface from the negative electrode layer 12 does not act on the solid electrolyte layer 13 (Fig. 2A(c)).

Also in the case of performing the initial discharging, similarly to the above, first, the all-solid-state battery 10 is prepared in which the positive electrode layer 11, the negative electrode layer 12, and the solid electrolyte layer 13 formed therebetween are laminated, and the positive electrode current collector 14 and the negative electrode current collector 15 are further provided (Fig. 2B(a)).

Next, the all-solid-state battery 10 is initially discharged. In the present embodiment, since an active material having a large theoretical expansion coefficient is contained, in this initial discharging, the positive electrode layer 11 greatly expands in the lamination direction, and at the same time, the negative electrode layer 12 greatly contracts in the lamination direction. In this case, in the present embodiment, as described above, the positive electrode layer 11 and the negative electrode layer 12 are formed so that actual expansion ratios thereof are close to each other. Therefore, since the amounts of change (the amount of expansion and the amount of contraction) in the positive electrode layer 11 and the negative electrode layer 12 are close to each other, the solid electrolyte layer 13 is not compressed unlike the all-solid battery 50 described in Fig. 3 (Fig. 2B(b)).

When charging is performed after the discharging is completed, the negative electrode layer 12 expands and the positive electrode layer 11 contracts this time. Also here, since the amounts of change (the amount of expansion and the amount of contraction) in the positive electrode layer 11 and the negative electrode layer 12 are close to each other, a force that separates a contact surface from the negative electrode layer 12 does not act on the solid electrolyte layer 13 (Fig. 2B(c)).

Therefore, in the all-solid-state battery 10 in the present embodiment, when charging and discharging are performed, it is possible to suppress a situation in which the contact area decreases and the interface resistance increases without causing a large stress at any interface between the positive electrode layer 11 and the solid electrolyte layer 13 and between the negative electrode layer 12 and the solid electrolyte layer 13. Accordingly, it is possible to avoid significant deterioration of cycle characteristics and to obtain an all-solid-state battery having good characteristics even by repeated charging and discharging.

### [Method of Manufacturing All-solid-state Battery]

A method of manufacturing an all-solid-state battery of the present embodiment is characterized in that an all-solid-state battery having the above-described configuration is obtained, and the manufacturing method can be operated in the same manner as a conventionally known manufacturing method. That is, the all-solid-state battery in the present embodiment can be manufactured by forming the positive electrode layer 11, the negative electrode layer 12, and the solid electrolyte layer 13, respectively, and laminating them to form a laminated electrode body.

For example, similarly to the conventional type of battery, each of the positive electrode layer 11, the negative electrode layer 12, and the solid electrolyte layer 13 can be formed by preparing a paste (slurry) composition containing various components described above, applying the paste (slurry) composition onto the positive electrode current collector 14 or the negative electrode current collector 15, drying the paste composition, and performing pressing at an appropriate pressure (for example, about 5 MPa to 300 MPa).

Then, the positive electrode layer 11 and the negative electrode layer 12 are laminated with the solid electrolyte layer 13 interposed therebetween to form a laminated electrode body, and then the laminated electrode body is pressed at a predetermined pressing pressure (for example, 2 to 4 tons/cm²), thereby improving the mechanical strength of the laminated electrode body and the conductivity (in other words, ion conduction path) in each layer. Then, a positive electrode terminal and a negative electrode terminal (not illustrated) for external connection are connected to the positive electrode current collector 14 and the negative electrode current collector 15, respectively.

In this case, from the actual expansion ratio (Ep) of the positive electrode layer and the actual expansion ratio (En) of the negative electrode layer, the combination is configured such that the absolute value of the difference [(Ep) - (En)] therebetween is within 10%.

In this case, the obtained all-solid-state battery is subjected to an initial charge treatment and further an initial discharge treatment, and further subjected to an appropriate aging treatment as desired, whereby a usable all-solid-state battery (all-solid-state lithium ion secondary battery in the present embodiment) 10 can be manufactured.

The all-solid-state battery 10 according to the present embodiment is accommodated in an exterior body (not illustrated) having a shape corresponding to a shape of the laminate obtained by laminating, as in the conventional type of battery. A material constituting the exterior body is not particularly limited. For example, an exterior body formed of metal (for example, aluminum) can be preferably used from the viewpoint of high physical strength, heat dissipation, and the like. Alternatively, a laminate film may be used for configuration in terms of ease of loading and the light weight of the entire battery module. In this case, preferred examples include a laminate film having a three-layer structure in which a metal layer is disposed between two synthetic resin layers.

Also, in a case where the all-solid-state battery disclosed herein is used as a high-output power source for driving a vehicle, a plurality of all-solid-state batteries may be connected to each other to form a battery module.

Although the present invention has been specifically described above with reference to the embodiment, the present invention is not construed as being limited to the embodiment, and it goes without saying that various modifications can be made without departing from the gist of the present invention.

### EXPLANATION OF REFERENCE CHARACTERS

- 10, 50: All-solid-state battery
- 11, 51: Positive electrode layer
- 12, 52: Negative electrode layer
- 13, 53: Solid electrolyte layer
- 14, 54: Positive electrode current collector
- 15, 55: Negative electrode current collector

## Claims

1. An all-solid-state battery comprising:
a positive electrode layer containing a positive electrode active material;
a negative electrode layer containing a negative electrode active material; and
a solid electrolyte layer which is formed between the positive electrode layer and the negative electrode layer and contains a solid electrolyte,
wherein the all-solid-state battery performs charging and discharging by a conversion reaction, and
wherein an absolute value of a difference [(Ep) - (En)] between an actual expansion ratio (Ep) of the positive electrode layer calculated by Formula (1) below and an actual expansion ratio (En) of the negative electrode layer calculated by Formula (2) below is 10% or less. Actual expansion ratio of positive electrode layer (Ep) = Expansion coefficient of positive electrode layer × Thickness ratio of positive electrode layer... (1) Actual expansion ratio of negative electrode layer (En) = Expansion coefficient of negative electrode layer × Thickness ratio of negative electrode layer... (2)

2. The all-solid-state battery according to claim 1,
wherein an expansion coefficient of the positive electrode layer and/or the negative electrode layer is 10% or more.

3. The all-solid-state battery according to claim 1,
wherein the positive electrode active material is formed of a material selected from CuCl₂, FeF₂, and S, and the negative electrode active material is formed of a material selected from Si, Li, Mg, and Al.

4. The all-solid-state battery according to claim 1,
wherein the positive electrode layer contains a positive electrode active material, a solid electrolyte, a conductive auxiliary agent, and a binder, and
wherein, when a content proportion on a mass basis is expressed as positive electrode active material : conductive auxiliary agent : binder : solid electrolyte = x : y : z : v, content proportions (% by mass) thereof are in ranges of 50 ≤ x ≤ 92.5, 2.5 ≤ y ≤ 45, 2.5 ≤ z ≤ 45, and 2.5 ≤ v ≤ 45.

5. The all-solid-state battery according to claim 1,
wherein the negative electrode layer contains a negative electrode active material, a solid electrolyte, a conductive auxiliary agent, and a binder, and
wherein, when a content proportion on a mass basis is expressed as positive electrode active material : conductive auxiliary agent : binder : solid electrolyte = x : y : z : v, content proportions (% by mass) thereof are in ranges of 50 ≤ x ≤ 92.5, 2.5 ≤ y ≤ 45, 2.5 ≤ z ≤ 45, and 2.5 ≤ v ≤ 45.

6. The all-solid-state battery according to claim 1,
wherein an absolute value of the difference [(Ep) - (En)] is 5% or less.

7. The all-solid-state battery according to claim 1,
wherein an absolute value of the difference [(Ep) - (En)] is 1% or less.

8. A method of manufacturing an all-solid-state battery which performs charging and discharging by a conversion reaction, the method comprising:
a step of preparing a positive electrode layer containing a positive electrode active material, a negative electrode layer containing a negative electrode active material, and a solid electrolyte layer containing a solid electrolyte; and
a step of laminating the positive electrode layer, the negative electrode layer, and the solid electrolyte layer to be disposed between the positive electrode layer and the negative electrode layer and pressing the layers in a lamination direction,
wherein an absolute value of a difference between an actual expansion ratio (Ep) of the positive electrode layer calculated by Formula (1) below and an actual expansion ratio (En) of the negative electrode layer calculated by Formula (2) below is 10% or less. Actual expansion ratio of positive electrode layer (Ep) = Expansion coefficient of positive electrode layer × Thickness ratio of positive electrode layer... (1) Actual expansion ratio of negative electrode layer (En) = Expansion coefficient of negative electrode layer × Thickness ratio of negative electrode layer... (2)
